Europäisches Patentamt

European Patent Office

Office européen des brevets

(19)

(11) Numéro de publication : **0 133 984**
**B1**

(12) **FASCICULE DE BREVET EUROPÉEN**

(45) Date de publication du fascicule du brevet :
09.09.87

(21) Numéro de dépôt : 84109045.9

(22) Date de dépôt : 31.07.84

(51) Int. Cl.⁴ : **H 01 B 3/40**, C 08 G 18/00,
C 08 G 59/40

(54) **Procédé d'isolation par imprégnation de conducteurs électriques.**

(30) Priorité : 03.08.83 FR 8312807

(43) Date de publication de la demande :
13.03.85 Bulletin 85/11

(45) Mention de la délivrance du brevet :
09.09.87 Bulletin 87/37

(84) Etats contractants désignés :
AT BE CH DE FR GB IT LI SE

(56) Documents cités :
US-A- 3 020 262
US-A- 3 313 747
US-A- 3 334 110
US-A- 3 876 618

(73) Titulaire : **ALSTHOM**
**38, avenue Kléber**
**F-75784 Paris Cédex 16 (FR)**

(72) Inventeur : **Anton, Alain**
**Rue de Beauregard Chaponnay**
**F-69360 Saint-Symphorien d'Ozon (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

**0 133 984**

## Description

La présente invention concerne un procédé d'isolation par imprégnation de conducteurs électriques à l'aide de résines à cycles isocyanurates et oxazolidones, dans lequel on enroule autour des conducteurs un ruban de tissu de verre et de papier de mica poreux, on imprègne le ruban d'un sel d'ammonium quaternaire catalysant la condensation de dérivés isocyanates et époxy en cycles isocyanurates et oxazolidones, et d'un vernis comprenant une résine époxy liquide et un dérivé isocyanate, puis on soumet le ruban imprégné à un traitement thermique de polymérisation du vernis.

On a déjà proposé dans les documents FR-A 2207952, 2242419 et 2427673, de fabriquer un isolant de bobinage électrique par condensation d'un dérivé isocyanate et d'un dérivé époxy en présence d'un catalyseur favorisant la formation de cycles isocyanurates et oxazolidones, ce catalyseur pouvant être constitué par un sel d'ammonium quaternaire contenant un radical alkyle à longue chaîne comportant au moins 8 atomes de carbone.

Selon le document FR-A 2427673, on a également proposé d'incorporer un catalyseur de durcissement du groupe des imidazoles dans un ruban de mica sur support de verre, imprégné d'une résine de silicone, et séché, d'imprégner le ruban isolant obtenu à l'aide d'un vernis constitué par un mélange de dérivés isocyanates et époxy, puis de le durcir par chauffage. Toutefois les sels d'ammonium quaternaire contenant un radical alkyle à longue chaîne sont très solubles dans la résine d'imprégnation du ruban, de sorte qu'ils migrent facilement du ruban dans le bain d'imprégnation et qu'ils produisent une augmentation de viscosité prématurée du vernis au cours de l'opération d'imprégnation, qui s'effectue par opérations successives alternées de mise sous vide, puis sous pression, ce qui entraîne une imprégnation plus difficile et imparfaite. Par ailleurs, les vernis sans solvant à base de dérivés isocyanates et époxy présentent une augmentation progressive de viscosité au stockage, ce qui réduit leur durée de conversation possible en fûts et en cuve.

L'invention a donc pour but de procurer un procédé permettant d'éviter toute réaction de condensation sous l'effet du catalyseur avant le chauffage du bain d'imprégnation, de disposer ainsi d'une résine d'imprégnation de très faible viscosité, cette viscosité pouvant rester constante extrêmement longtemps, et d'assurer une imprégnation facile et bien homogène du ruban.

Le procédé selon l'invention est caractérisé en ce que l'on emploie comme sel d'ammonium quaternaire un halogénure de benzyltrialkylammonium à chaîne alkyle contenant au plus 3 atomes de carbone, on imprègne le ruban en premier lieu de l'halogénure de benzyltrialkylammonium et de la résine époxy liquide, on le sèche à une température au plus égale à 135 °C, puis on l'imprègne d'un vernis à base de dérivé isocyanate, avant de soumettre le ruban au traitement thermique de polymérisation.

Il répond en outre de préférence à au moins l'une des caractéristiques suivantes :

— L'on dissout l'halogénure de benzyl-trialkylammonium dans la résine époxy liquide, pui imprègne le ruban de cette dernière.

— L'halogénure de benzyl-trialkylammonium est le chlorure de benzyltriméthylammonium ou le chlorure de benzyl-triéthylammonium.

— La proportion d'halogénure de benzyl-trialkylammonium est de 0,2 à 5 % en poids, et de préférence de 0,8 à 1,5 % en poids, du vernis total.

— Les proportions respectives de résine époxy liquide et de dérivé isocyanate sont telles que le rapport des équivalents époxy aux équivalents isocyanate dans le vernis d'imprégnation final soit compris entre 1/7 et 1/25, et de préférence entre 1/20 et 1/25.

Le ruban utilisé est formé d'un papier de mica sur lequel est collé à l'aide d'une poudre époxy d'un point de fusion relativement élevé, un ou plusieurs tissus de verre, ou un feutre ou un film polyamide ou polyester.

Ce ruban est de préférence surlaqué à l'aide d'une solution de résine époxy et de catalyseur. L'ensemble est ensuite séché sous forte ventilation à une température ne dépassant pas 135 °C, pour ne pas permettre au catalyseur d'agir avant le traitement thermique.

L'imprégnation par le vernis à l'isocyanate s'effectue de manière connue en disposant dans une cuve les conducteurs ou les appareils électriques bobinés revêtus des couches de ruban déjà imprégné de résine époxy et de catalyseur, puis en les soumettant à des phases successives alternées de mise sous vide, puis de mise sous pression, en présence du vernis à l'isocyanate.

Pour le traitement thermique de polymérisation, on met les conducteurs imprégnés et appareils électriques bobinés imprégnés dans une étuve où ils sont portés à une température suffisante et pendant un temps suffisant pour les réactions de condensation s'effectuent. Par exemple, on place les conducteurs imprégnés et/ou appareils électriques bobinés imprégnés dans une étuve et les porte à 130 °C en 1 h 30. On les maintient à cette température pendant 2 h. Puis on les porte à 150 °C, pendant 4 h. On termine le traitement par une post-cuisson de 15 h à 200 °C.

On peut utiliser comme résine époxy les résines époxy du bisphénol A ou du bisphénol F d'équivalent époxy compris entre 160 et 1 800, les résines époxy novolaque d'équivalent époxy compris entre 160 et 250, les résines époxy cycloaliphatiques liquides telles que celles commercialisées par la Société Ciba-Geigy sous les désignations CY-192 ou CY-179.

Comme dérivé isocyanate, on peut utiliser des diisocyanates tels que le 4-4' diphénylméthane

2

diisocyanate, le 2,4-toluène diisocyanate, le 1,2-diisocyanate de butane, le 1,4-diisocyanate de butane, le 1,3-diisocyanate de propane.

On peut utiliser aussi des polyisocyanates à trois fonctions réactives ou plus, tels que le triisocyanate de triphénylméthane, le tétraisocyanate de 3-3', 4-4'-diphénylméthane.

Il est décrit ci-après, à titre d'exemples, la préparation d'isolants par imprégnation selon l'invention. Leurs propriétés électriques sont réunies dans le tableau unique qui les suit :

## Exemple 1

Un ruban formé de papier mica de 150 g/m$^2$ et d'un tissu de verre de 23 g/m$^2$ collé à l'aide d'une poudre époxy est surlaqué à raison de 5,46 g/m$^2$ de base à l'aide de la résine de la composition pondérale.
— résine époxy novolaque (équivalent époxy 172)              82,4 %
— chlorure de benzyltriméthylammonium                    17,6 %

Le ruban ainsi formé est dégazé sous vide, puis imprégné avec un vernis formé de 4,4'-diphénylméthane diisocyanate technique seul.

## Exemple 2

Le même ruban que celui de l'exemple 1 est imprégné par un mélange de

— 2,4-toluène diisocyanate               80 % en poids
— 2,6-toluène diisocyanate               20 % en poids

## Exemple 3

Un ruban identique à celui de l'exemple 1, mais surlaqué avec une résine de la composition pondérale suivante :

— résine époxy du bisphénol A (équivalent époxy 178)         27,4 %
— résine époxy novolaque (équivalent époxy 172)             55 %
— chlorure de benzyltriméthylammonium                   17,6 %

Le ruban est imprégné à l'aide de 4,4'-diphénylméthane diisocyanate.

## Exemple 4

Le même ruban que dans l'exemple 3 est imprégné par un mélange

— 2,4-toluène diisocyanate               80 % en poids
— 2,6-toluène diisocyanate               20 % en poids

Les constantes de pertes et les constantes diélectriques des isolants obtenus sont réunies dans le tableau ci-dessous.

| | | | Constante diélectrique $\epsilon$ | | |
|---|---|---|---|---|---|
| | tg $\delta$ à 200°C sous 1,2 KV initiale | tg $\delta$ à 230°C sous 1,2 KV initiale | à 200°C sous 1,2 KV initial | à 230°C sous 1,2 KV initial | tg $\delta$ à 200°C sous 1,2 KV après 1000H à 230°C |
| Exemple 1 | 0,083 | 0,16 | 4,2 | 4,8 | 0,069 |
| Exemple 2 | 0,097 | 0,19 | 4,5 | 5,0 | 0,088 |
| Exemple 3 | 0,092 | 0,18 | 4,3 | 4,9 | 0,075 |
| Exemple 4 | 0,098 | 0,20 | 4,3 | 4,8 | 0,087 |

## Revendications

1. Procédé d'isolation par imprégnation de conducteurs électriques à l'aide de résines à cycles isocyanurates et oxazolidones, dans lequel on enroule autour des conducteurs un ruban de tissu de verre et de papier de mica poreux, on imprègne le ruban d'un sel d'ammonium quaternaire catalysant la condensation de dérivés isocyanates et époxy en cycles isocyanurates et oxazolidones, et d'un vernis comprenant une résine époxy liquide et un dérivé isocyanate, puis on soumet le ruban imprégné à un traitement thermique de polymérisation· du vernis, caractérisé en ce que l'on emploie comme sel d'ammonium quaternaire un halogénure de benzyl-trialkylammonium à chaîne alkyle contenant au plus 3 atomes de carbone, on imprègne le ruban en premier lieu de l'halogènure de benzyltrialkylammonium et de la résine époxy liquide, on le sèche à une température au plus égale à 135 °C, puis on l'imprègne d'un vernis à base de dérivé isocyanate, avant de soumettre le ruban au traitement thermique de polymérisation.

2. Procédé selon la revendication 1, caractérisé en ce que l'on dissout l'halogénure de benzyl-trialkylammonium dans la résine époxy liquide, puis imprègne le ruban de cette dernière.

3. Procédé selon les revendications 1 ou 2, caractérisé en ce que l'halogénure de benzyl-trialkylammonium est le chlorure de benzyl-triméthylammonium ou le chlorure de benzyl-triéthylammonium.

4. Procédé selon l'une des revendications 1 à 3, caractérisé en ce que la proportion d'halogénure de benzyl-trialkylammonium est de 0,2 à 5 % en poids, et de préférence de 0,8 à 1,5 % en poids, du vernis total.

5. Procédé selon l'une des revendications 1 à 4, caractérisé en ce que les proportions respectives de résine époxy liquide et de dérivé isocyanate sont telles que le rapport des équivalents époxy aux équivalents isocyanate dans le vernis d'imprégnation final soit compris entre 1/7 et 1/25, et de préférence entre 1/20 et 1/25.

## Claims

1. A method for insulating electric conductors by impregnation with resins having isocyanurate and oxazolidone cycles, wherein the conductors are wrapped with a tape of glass fabric and porous mica paper, the tape is impregnated with a quaternary ammonium salt catalyzing the condensation of isocyanate and epoxy derivatives into isocyanurate and oxazolidone cycles, and with a varnish comprising a liquid epoxy resin and an isocyanate derivative, then the impregnated tape is submitted to a heat treatment for polymerisation of the varnish, characterized in that a benzyltrialkylammonium halide with an alkyl chain containing at most three carbon atoms is used as quaternary ammonium salt, the tape is first impregnated with the benzyltrialkylammonium halide and the liquid epoxy resin, it is dried at a temperature at the most equal to 135 °C, then it is impregnated with a varnish on the basis of isocyanate derivative, prior to being submitted to the polymerizing heat treatment.

2. A method according to claim 1, characterized in that the benzyltrialkylammonium halide is dissolved in the liquid epoxy resin, and then the tape is impregnated with the latter.

3. A method according to claims 1 or 2, characterized in that the benzyltrialkylammonium halide is the benzyltrimethylammonium chloride or the benzyltriethylammonium chloride.

4. A method according to one of claims 1 to 3, characterized in that the content of benzyltrialkylammonium halide is 0,2 to 5 % by weight and preferably of 0,8 to 1,5 % by weight of the total varnish weight.

5. A method according to one of claims 1 to 4, characterized in that the respective proportions of liquid epoxy resin and of isocyanate derivative are such that the ratio between the epoxy equivalents and the isocyanate equivalents in the final impregnation varnish is situated between 1/7 and 1/25, and preferably between 1/20 and 1/25.

## Patentansprüche

1. Verfahren zur Isolierung von elektrischen Leitern durch Imprägnierung mit Harzen mit Isocyanurat- und Oxazolidonringen, bei dem man um die Leiter ein Band aus Glasgewebe und porösem Glimmerpapier wickelt, das Band mit einem quaternären Ammoniumsalz, das die Kondensation der Isocyanat- und Epoxyderivate in Isocyanurat- und Oxazolidonringe katalysiert, und mit einem Lack tränkt, der ein flüssiges Epoxyharz und ein Isocyanatderivat enthält, dann das imprägnierte Band einer Wärmebehandlung zur Polymerisation des Lacks unterwirft, dadurch gekennzeichnet, daß man als quaternäres Ammoniumsalz ein Benzyltrialkylammoniumhalogenid mit einer Alkylkette, die höchstens 3 Kohlenstoffatome enthält, verwendet, daß man das Band zuerst mit dem Benzyltrialkylammoniumhalogenid und dem flüssigen Epoxyharz tränkt, es bei einer Temperatur von höchstens 135 °C trocknet und es dann mit einem Lack auf der Basis von Isocyanatderivat imprägniert, ehe man das Band der Polymerisations-Wärmebehandlung unterwirft.

2. Verfahren nach Anspruch 1, dadurch gekennzeichnet, daß man das Benzyltrialkylammoniumhalogenid in dem flüssigen Epoxyharz auflöst und dann das Band mit diesem letzteren tränkt.

3. Verfahren nach den Ansprüchen 1 oder 2, dadurch gekennzeichnet, daß das Benzyltrialkylammoniumhalogenid das Benzyltrimethylammoniumchlorid oder das Benzyltriäthylammoniumchlorid ist.

4. Verfahren nach einem der Ansprüche 1 bis 3, dadurch gekennzeichnet, daß der Anteil an Benzyltrialkylammoniumhalogenid zwischen 0,2 und 5 Gew.%, und vorzugsweise zwischen 0,8 und 1,5 Gew.% des gesamten Lacks liegt.

5. Verfahren nach einem der Ansprüche 1 bis 4, dadurch gekennzeichnet, daß die jeweiligen Anteile von flüssigem Epoxyharz und Isocyanatderivat so sind, daß das Verhältnis der Epoxyäquivalente zu den Isocyanatäquivalenten im endgültigen Imprägnierlack zwischen 1/7 und 1/25, und vorzugsweise zwischen 1/20 und 1/25 liegt.